# EUROPEAN PATENT APPLICATION

(11) **EP 4 685 167 A1**
(43) Date of publication of application: **28.01.2026**
(21) Application number: 25188000.1
(22) Date of filing: 08.07.2025
(51) Int. Cl.: C08F 265/10, C08L 51/00, H01M 4/13, H01M 4/62, H01M 10/052

(54) **BINDER FOR RECHARGEABLE LITHIUM BATTERY, NEGATIVE ELECTRODE PLATE INCLUDING THE SAME, AND RECHARGEABLE LITHIUM BATTERY INCLUDING THE SAME**

(30) Priority: 24.07.2024 KR 20240097799
(71) Applicant: SAMSUNG SDI CO., LTD., Yongin-si, Gyeonggi-do 17084 (KR)
(72) Inventor: CHO, Yunshik, 17084 Yongin-si, Gyeonggi-do (KR); LEE, Kukjoo, 17084 Yongin-si, Gyeonggi-do (KR); PARK, Sujin, 17084 Yongin-si, Gyeonggi-do (KR); LEE, Hyunseop, 17084 Yongin-si, Gyeonggi-do (KR); JUNG, Kyunghwa, 17084 Yongin-si, Gyeonggi-do (KR); HAN, Imkyung, 17084 Yongin-si, Gyeonggi-do (KR); CHOI, Jewon, 17084 Yongin-si, Gyeonggi-do (KR); KIM, Eunji, 17084 Yongin-si, Gyeonggi-do (KR); CHO, Minho, 17084 Yongin-si, Gyeonggi-do (KR); KIM, Hana, 17084 Yongin-si, Gyeonggi-do (KR); CHOI, Kyubuem, 17084 Yongin-si, Gyeonggi-do (KR)
(74) Representative: Michalski Hüttermann & Partner Patentanwälte mbB

(57) **Abstract**

Examples of this disclosure include binders, negative electrode plates, and rechargeable lithium batteries. The binder includes a core including a first polymer having a glass transition temperature that is equal to or less than about 15°C, and a shell on the core and including a second polymer having a glass transition temperature that is equal to or greater than about 180°C. An amount of the shell is less than the amount of the core.

## Description

### CROSS-REFERENCE TO RELATED APPLICATION

This application claims priority to Korean Patent Application No. 10-2024-0097799 filed on July 24, 2024 in the Korean Intellectual Property Office.

### BACKGROUND

The present disclosure relates to a binder for a rechargeable lithium battery, a negative electrode plate including the binder, and a rechargeable lithium battery including the binder.

With increasing use of battery using electronic devices, such as, e.g., mobile phones, laptop computers, electric vehicles, and the like, there is increasing demand for rechargeable batteries with high energy density and high capacity. Therefore, improving the performance of rechargeable lithium batteries may be advantageous.

A rechargeable lithium battery includes a positive electrode, a negative electrode, and an electrolyte, the positive and negative electrodes include an active material in which intercalation and deintercalation are possible, and generates electrical energy caused by oxidation and reduction reactions when lithium ions are intercalated and deintercalated.

### SUMMARY

Some example embodiments of the present disclosure include a binder capable of improving an adhesive force between a negative electrode active material layer and a current collector, and of maintaining physical properties in an electrolyte.

Some example embodiments of the present disclosure include a negative electrode plate capable of having a desired or improved adhesive force, exhibiting a low resistance, and reducing or preventing delamination of an electrode plate even at a full charge.

According to an example embodiment of the present disclosure, a binder for a rechargeable lithium battery may include a core including a first polymer having a glass transition temperature that is equal to or less than about 15°C, and a shell on the core, and including a second polymer having a glass transition temperature that is equal to or greater than about 180°C. An amount of the shell may be less than an amount of the core.

According to an example embodiment of the present disclosure, a negative electrode plate may include a negative electrode current collector, and a negative electrode active material layer. The negative electrode active material layer may include a negative electrode active material, and the aforementioned binder for the rechargeable lithium battery.

According to an example embodiment of the present disclosure, a rechargeable lithium battery includes the binder for the rechargeable lithium battery discussed above.

### BRIEF DESCRIPTION OF DRAWINGS

FIG. 1 illustrates a simplified conceptual diagram showing a rechargeable lithium battery according to some example embodiments of the present disclosure.
FIGS. 2 to 5 illustrate simplified diagrams showing a rechargeable lithium battery according to some example embodiments of the present disclosure, with FIG. 2 showing a cylindrical battery, FIG. 3 showing a prismatic battery, and FIGS. 4 and 5 showing pouch-type batteries.
FIG. 6 illustrates a cross-sectional view showing a negative electrode plate according to some example embodiments of the present disclosure.
FIG. 7 illustrates a diagram showing a binder according to some example embodiments of the present disclosure.

### DETAILED DESCRIPTION

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that when an element is referred to as being "on" another element, the element can be directly on the other element, or intervening elements may be present between therebetween. In the drawings, thicknesses of some components are exaggerated for effectively explaining the technical contents. Like reference numerals refer to like elements throughout the specification.

Some example embodiments detailed in this description are discussed with reference to sectional and/or plan views as ideal exemplary views of the present disclosure. In the drawings, thicknesses of layers and regions are exaggerated for effectively explaining the technical contents. Accordingly, regions exemplarily illustrated in the drawings have general properties, and shapes of regions exemplarily illustrated in the drawings are used to exemplarily disclose specific shapes but not limited to the scope of the present disclosure. It is understood that, although the terms "first", "second", "third", etc. may be used herein to describe various elements, these elements should not be limited by these terms. These terms are only used to distinguish one element from another element. The example embodiments explained and illustrated herein include complementary example embodiments thereof.

The terminology used herein is for the purpose of describing example embodiments only and is not intended to limit the present disclosure. As used herein, the singular forms are intended to include the plural forms as well. The terms 'comprises/includes' and/or 'comprising/including' used in the specification do not exclude the presence or addition of one or more other components.

As used herein, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter (D₅₀) where a cumulative volume is about 50 volume % in a particle size distribution. The average particle diameter (D₅₀) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, an average particle diameter (D₅₀) value may be obtained through a calculation. Dissimilarly, a laser scattering method may be utilized to measure the average particle diameter (D₅₀). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

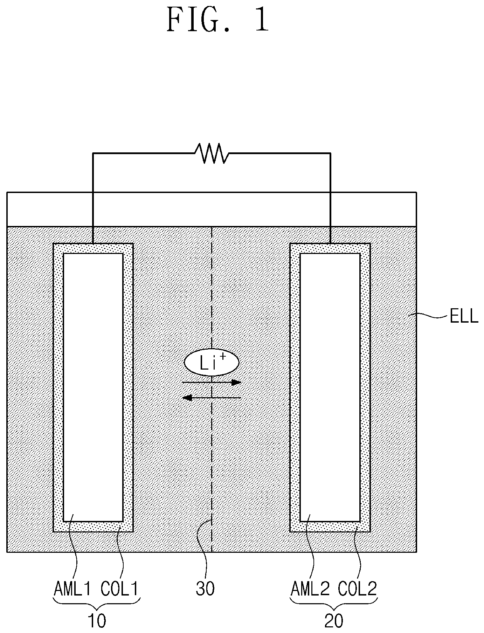

FIG. 1 illustrates a simplified conceptual diagram showing a rechargeable lithium battery according to some example embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be located between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material, and may further include a binder and/or a conductive material.

For example, the positive electrode 10 may further include an additive that can constitute a sacrificial positive electrode.

An amount of the positive electrode active material may be in a range of about 90 wt% to about 99.5 wt% relative to 100 wt% of the positive electrode active material layer AML1. An amount of each, or at least one, of the binder and the conductive material may be in a range of about 0.5 wt% to about 5 wt% relative to 100 wt% of the positive electrode active material layer AML1.

The binder may be configured to improve attachment of positive electrode active material particles to each other, and also to improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may be configured to provide an electrode with conductivity, and any suitable conductive material that does not cause a chemical change in a battery may be included as the conductive material. The conductive material may include, for example, a carbon-based material such as at least one of natural graphite, artificial graphite, carbon black, acetylene black, Ketjen black, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

Aluminum (Al) may be included as the current collector COL1, but the present disclosure is not limited thereto.

### Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium, and a metal that is or includes at least one of cobalt, manganese, nickel, and a combination thereof.

The composite oxide may include a lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-8-c}Co_{b}X_{c}O_{2-α}D_{α} (where 0.90≤a≤1.8, 0≤b≤0.5, 0≤c≤0.5, and 0<α<2); LiₐNi_{1-b-c}Mn_{b}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); LiₐFePO₄ (where 0.90≤a≤1.8).

In the chemical formulae above, A is or includes at least one of Ni, Co, Mn, or a combination thereof, X is or includes at least one of Al, Ni, Co, Mn, Cr, Fe, Mg, Sr, V, a rare-earth element, or a combination thereof, D is or includes at least one of O, F, S, P, or a combination thereof, G is or includes at least one of Al, Cr, Mn, Fe, Mg, La, Ce, Sr, V, or a combination thereof, and L¹ is or includes at least one of Mn, Al, or a combination thereof.

For example, the positive electrode active material may be or include a high-nickel-based positive electrode active material having a nickel amount that is equal to or greater than about 80 mol%, equal to or greater than about 85 mol%, equal to or greater than about 90 mol%, equal to or greater than about 91 mol%, or equal to or greater than about 94 mol% and equal to or less than about 99 mol% relative to 100 mol% of metal devoid of lithium in the lithium transition metal composite oxide. The high-nickel-based positive electrode active material may achieve high capacity, and thus may be applied to a high-capacity and high-density rechargeable lithium battery.

### Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material, and may further include a binder and/or a conductive material.

For example, the negative electrode active material layer AML2 may include a negative electrode active material in a range of about 90 wt% to about 99 wt%, a binder in a range of about 0.5 wt% to about 5 wt%, and a conductive material in a range of about 0 wt% to about 5 wt%.

The binder may be configured to improve attachment of negative electrode active material particles to each other, and also to improve attachment of the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is included as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material, for example, at least one of polytetrafluoroethylene, polyvinylidene fluoride, polyvinylidene fluoride-hexafluoropropylene copolymer, polyethylene oxide, or a combination thereof.

The conductive material may be configured to provide an electrode with conductivity, and any suitable conductive material that does not cause a chemical change in a battery may be included as the conductive material. For example, the conductive material may include a carbon-based material such as or including at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include at least one of a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal that is or includes at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least one of silicon, silicon-carbon composite, SiOx (where 0<x<2), Si-Q alloy (where Q is or includes at least one of alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include at least one of Sn, SnO₂, a Sn-based alloy, a combination thereof.

The silicon-carbon composite may be or include a composite of silicon and amorphous carbon. According to some example embodiments, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be located between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer on a surface of the core.

The Si-based negative electrode active material or the Sn-based negative electrode active material may be included in combination with a carbon-based negative electrode active material.

### Separator 30

Based on type of the rechargeable lithium battery, the separator 30 may be present between the positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer located on one or on opposite surfaces of the porous substrate, which coating layer includes an organic material, an inorganic material, or a combination thereof.

The porous substrate may be or include a polymer layer including at least one of polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be or include a copolymer or mixture including two or more of the materials mentioned above.

The organic material may include a polyvinylidenefluoride-based copolymer or a (meth)acrylic copolymer.

The inorganic material may include an inorganic particle such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present disclosure is not limited thereto.

The organic material and the inorganic material may be mixed in one coating layer, or may be present as a stack of a coating layer including the organic material, and a coating layer including an inorganic material.

### Electrolyte ELL

The electrolyte ELL for the rechargeable lithium battery may include a non-aqueous organic solvent and a lithium salt.

The non-aqueous organic solvent may constitute a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include at least one of ethyl alcohol or isopropyl alcohol. The aprotic solvent may include at least one of nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone or in a mixture of two or more substances.

In addition, when a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be or include a material that is dissolved in the non-aqueous organic solvent to constitute a supply source of lithium ions in a battery, and plays a role in enabling a basic operation of a rechargeable lithium battery and in promoting the movement of lithium ions between positive and negative electrodes. The lithium salt may include, for example, at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB)

### Rechargeable Lithium Battery

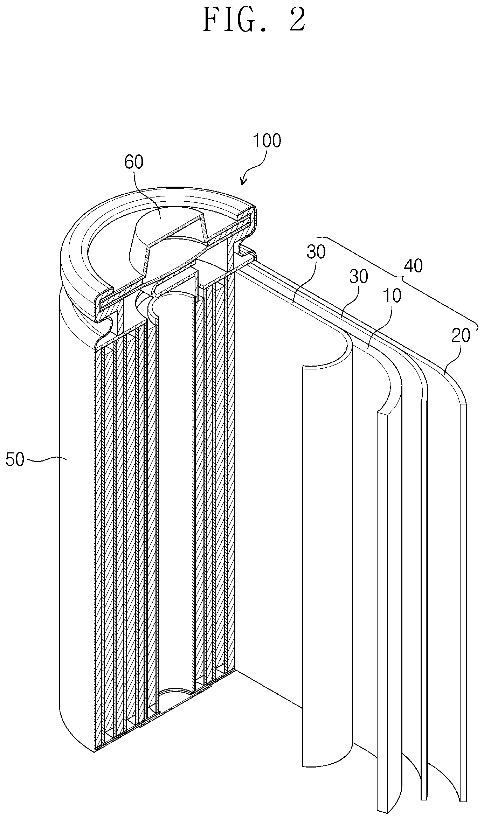

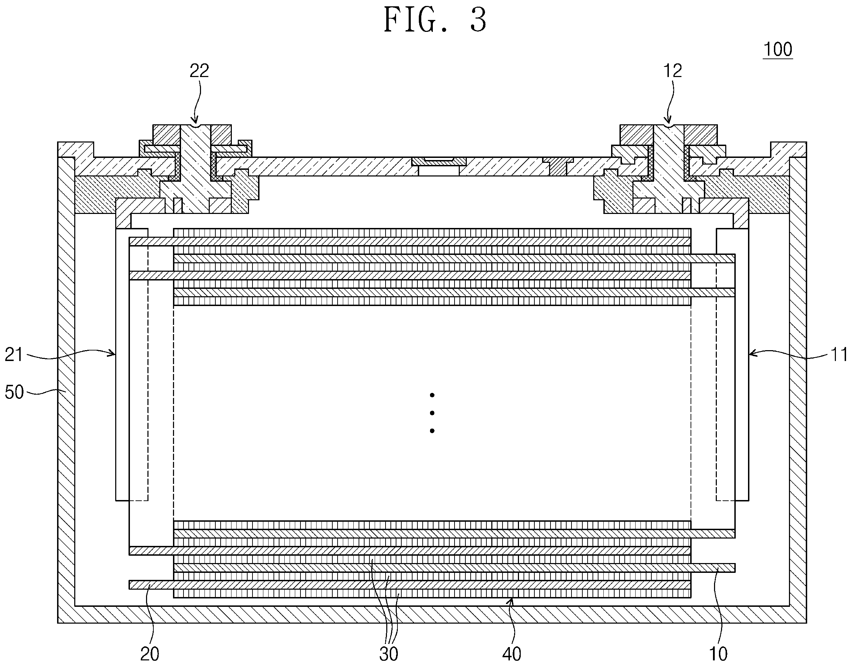

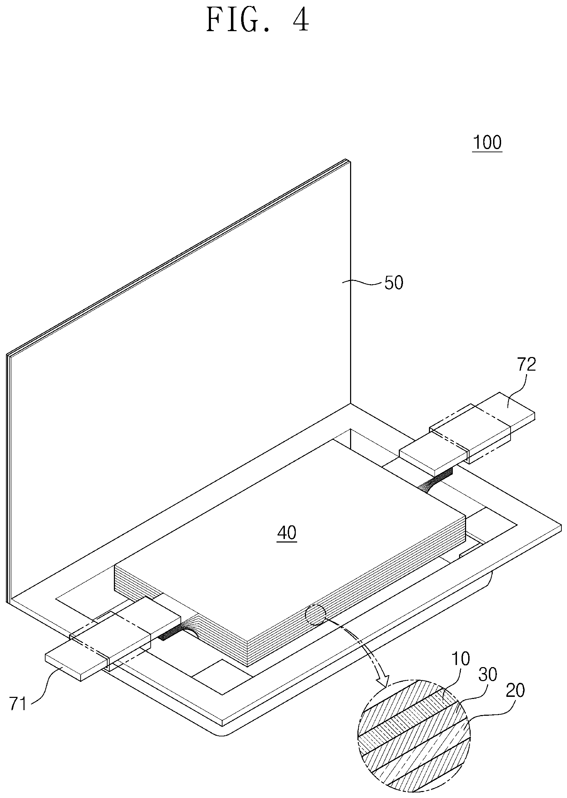

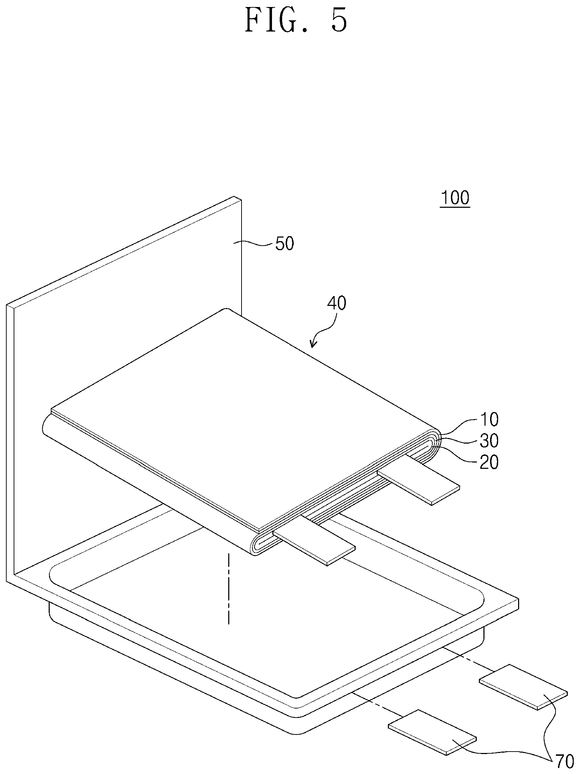

Based on the shape of a rechargeable lithium battery, the rechargeable lithium battery may be classified into cylindrical, prismatic, pouch, and coin types. FIGS. 2 to 5 illustrate simplified diagrams illustrating a rechargeable lithium battery according to some example embodiments, with FIG. 2 illustrating a cylindrical battery, FIG. 3 illustrating a prismatic battery, and FIGS. 4 and 5 illustrating pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70 illustrated in FIG. 5, or a positive electrode tab 71 and a negative electrode tab 72 illustrated in FIG. 4, the electrode tabs 70/71/72 forming an electrical path for externally inducing a current generated in the electrode assembly 40 to outside the battery 100.

The rechargeable lithium battery according to some example embodiments of the present disclosure may be applicable to automotive vehicles, mobile phones, and/or any other electrical devices, but the present disclosure is not limited thereto.

The following description describes a negative electrode and a binder for a rechargeable lithium battery according to some example embodiments of the present disclosure.

### Negative Electrode Plate

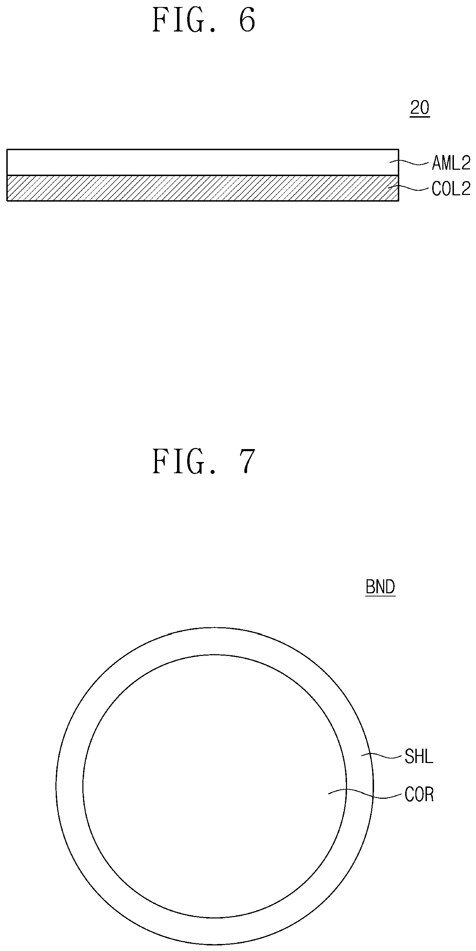

FIG. 6 illustrates a cross-sectional view illustrating a negative electrode (or a negative electrode plate) according to some example embodiments of the present disclosure. In the following disclosure, a description of components that are the same as the components discussed with reference to FIGS. 1 to 5 is omitted, and a difference thereof is discussed in detail.

Referring to FIG. 6, the negative electrode 20 for a rechargeable lithium battery may include a current collector COL2 and a negative electrode active material layer AML2 located on the current collector COL2. The negative electrode active material layer AML2 may include a negative electrode active material and may further include a binder and/or a conductive material.

The binder may include a binder BND which is discussed with reference to FIG. 7. For example, a negative electrode plate according to some example embodiments of the present disclosure may include a negative electrode active material layer, and the negative electrode active material layer may include a negative electrode active material and a binder BND of FIG. 7. Thus, a rechargeable lithium battery according to some example embodiments of the present disclosure may include the binder BND. When the negative electrode active material layer AML2 includes the binder (see BND of FIG. 7), it may be possible to increase an adhesive force between the negative electrode active material layer AML2 and the current collector COL2 and to decrease a resistance of the rechargeable lithium battery.

The negative electrode active material layer AML2 may further include a water-soluble polymer compound binder in addition to the binder (see BND of FIG. 7) which is discussed below. For example, the water-soluble polymer compound binder may include the cellulose-based compound discussed above. The water-soluble polymer compound binder may provide favorable viscosity to negative electrode slurry, and may improve temporal stability of negative electrode slurry.

For example, the water-soluble polymer compound binder may be present in an amount in a range of about 0 wt% to about 2 wt% or about 0.5 wt% to about 2 wt% relative to the total weight of the negative electrode active material, the binder BND, and the water-soluble polymer compound binder. When an amount of the water-soluble polymer compound binder falls within any of the ranges above, it may be possible to provide favorable viscosity to negative electrode slurry, and to improve temporal stability of negative electrode slurry.

For example, the binder (see BND of FIG. 7) may be present in an amount in a range of about 0.5 wt% to about 3 wt% relative to the total weigh of the negative electrode active material and the water-soluble polymer compound binder. When an amount of the binder (see BND of FIG. 7) falls within the range above, it may be possible to increase an adhesive force between the negative electrode active material layer AML2 and the current collector COL2, and to decrease a resistance of the rechargeable lithium battery.

### Binder BND

FIG. 7 is a diagram illustrating a binder according to some example embodiments of the present disclosure. In the following, a description of components that are the same as those discussed with reference to FIGS. 1 to 6 is omitted, and a difference thereof is discussed in detail.

Referring to FIG. 7, the binder BND may have the shape of a particle. For example, the binder BND may have a substantially spherical shape or a substantially oval shape.

The binder BND may have an average particle diameter in a range of about 250 nm to about 1,500 nm. For example, the binder BND may have an average particle diameter of about 500 nm to about 1,200 nm. The average particle diameter may be measured through a wet laser diffraction scattering method. When the average particle diameter falls within any of the ranges above, it may be possible to increase an adhesive force between the negative electrode active material layer AML2 and the current collector COL2, to decrease a resistance of the rechargeable lithium battery, and to reduce or prevent cracks in coating and dry processes of negative electrode slurry.

The binder BND may include a core COR and a shell SHL. In the binder BND, an amount of the core COR may be greater than the amount of the shell SHL. For example, an amount of the shell SHL may be less than the amount of the core COR. For example, the shell SHL may be present in an amount in a range of about 3 wt% to about 15 wt% relative to the total weight of the binder BND. For example, the shell SHL may be present in an amount of about 3 wt% to about 10 wt%, an amount of about 3 wt% to about 7 wt%, or an amount of about 5 wt% relative to the total weight of the binder BND. When an amount of the shell SHL falls within any of the ranges above, it may be possible to increase an adhesive force between the negative electrode active material layer AML2 and the current collector COL2, and to decrease a resistance of the rechargeable lithium battery. In addition, when an amount of the shell SHL falls within the range above, it may be possible to maintain physical properties of the binder BND in an electrolyte and to reduce or prevent delamination of the negative electrode plate even at a full charge of the rechargeable lithium battery. As discussed below, the core COR and the shell SHL may respectively include a first polymer and a second polymer.

The core COR may include a first polymer. The first polymer may have a glass transition temperature that is equal to or less than about 15°C. For example, the first polymer may have a glass transition temperature in a range of about -20°C to about 15°C, about -5°C to about 15°C, or 0°C to about 15°C. When the first polymer has a glass transition temperature within any of the ranges above, the first polymer may have desired or improved ductility. For example, the first polymer may have a superior ductility to the ductility of the second polymer which is discussed below. Thus, the binder BND may be stretchable and adhered over a large area. For example, in this description, the glass transition temperature is determined according to ASTM D3418 using differential scanning calorimetry (DSC) at a heating rate of 20°C/min.

The first polymer may be hydrophobic. The core COR may be hydrophobic. The first polymer may include at least one of a first unit derived from an aromatic vinyl-based monomer, a second unit derived from a (meth)acrylate-based monomer, a third unit derived from a (meth)acrylic acid-based monomer, and a fourth unit derived from a (meth)acrylamide-based monomer. For example, the first polymer may include the first unit derived from the aromatic vinyl-based monomer, the second unit derived from the (meth)acrylate-based monomer, the third unit derived from the (meth)acrylic acid-based monomer, and the fourth unit derived from the (meth)acrylamide-based monomer.

The aromatic vinyl-based monomer may include one or more of styrene, p-methylstyrene, m-methylstyrene, p-t-butylstyrene, and m-t-butylstyrene. For example, the aromatic vinyl-based monomer may be or include styrene.

The (meth)acrylate-based monomer may include one or more of 2-ethylhexyl (meth)acrylate, n-octyl (meth)acrylate, octyl (meth)acrylate, butyl (meth)acrylate, ethyl (meth)acrylate, methyl (meth)acrylate, cyclohexyl (meth)acrylate, and isopropyl (meth)acrylate. For example, the (meth)acrylate-based monomer may include 2-ethylhexyl (meth)acrylate.

The (meth)acrylic acid-based monomer may include, for example, one or more of (meth)acrylic acid, itaconic acid, maleic acid, and fumaric acid.

The (meth)acrylamide-based monomer may include, for example, one or more of (meth)acrylamide, N-methyl(meth)acrylamide, N-t-butyl(meth)acrylamide, N-hydroxymethyl(meth)acrylamide, and N-butoxymethyl(meth)acrylamide.

The first polymer may further include a unit derived from another monomer that can copolymerize with the first to fourth units besides the first to fourth units. For example, the other monomer may include one or more of 2-hydroxyethyl (meth)acrylate, 2-hydroxypropyl (meth)acrylate, 4-hydroxybutyl (meth)acrylate, 2-hydroxy-3-phenoxypropyl (meth)acrylate, glycidyl (meth)acrylate, methoxyethyl (meth)acrylate, 1,4-butanediol diacrylate, 1,4-butanediol dimethacrylate, and divinylbenzene.

When the core COR includes the first polymer, the negative electrode (see 20 of FIG. 6) including the binder BND may have desired or improved ion conductivity and low resistance.

The shell SHL may be disposed on the core COR. The shell SHL may be formed to cover a surface of the core COR.

The shell SHL may include the second polymer. The second polymer may have a glass transition temperature that is equal to or greater than about 180°C. For example, the second polymer may have a glass transition temperature in a range of about 180°C to about 240°C, or about 180°C to about 200°C. When the second polymer has a glass transition temperature within any of the ranges above, the second polymer may have desired or improved rigidity. For example, the second polymer may have a rigidity that is greater than the rigidity of the first polymer. The glass transition temperature (Tg) of a polymer is the temperature at which the mobility of the molecular chains changes drastically. Above Tg, the polymer transitions to a rubbery state, resulting in increased chain mobility and decreased rigidity. Conversely, below Tg, the molecular chains are restricted, and the polymer maintains a glassy state with relatively higher rigidity and hardness. Therefore, under the same temperature conditions, polymers with a higher glass transition temperature tend to exhibit more restricted molecular mobility and consequently increased rigidity. Thus, the binder BND may maintain physical properties in an electrolyte and reduce or prevent the negative electrode plate from delamination even at a full charge of the rechargeable lithium battery.

The second polymer may be hydrophilic. The shell SHL may be hydrophilic. The shell SHL may be more hydrophilic than the core COR. The shell SHL may disperse the hydrophobic core COR in an aqueous solvent. As the shell SHL includes the second polymer, the binder BND may be charged on the surface thereof and may be stably dispersed in an aqueous solvent.

The second polymer may be or include a copolymer. The second polymer may include a fifth unit derived from an acrylic acid-based monomer, a sixth unit derived from an acrylonitrile-based monomer, and a seventh unit derived from a sulfonic acid-based monomer.

The acrylic acid-based monomer may include, for example, at least one of (meth)acrylic acid, metal salt of (meth)acrylic acid, and ammonium salt of (meth)acrylic acid.

In this description, "(meth)" may or may not include a methyl group.

In the metal salt of (meth)acrylic acid, the metal may be or include alkali metal. For example, the metal may be or include at least one of lithium, sodium, or potassium. The metal salt of (meth)acrylic acid may include, for example, at least one of sodium acrylate, lithium acrylate, potassium acrylate, sodium methacrylate, lithium methacrylate, potassium methacrylate, or a combination thereof.

The ammonium salt of (meth)acrylic acid may include, for example, one or more of an ammonia neutralized product of (meth)acrylic acid, a monoethanolamine neutralized product, a diethanolamine neutralized product, and a hydroxylamine neutralized product.

The fifth unit derived from the acrylic acid-based monomer may be present in an amount that is obtained by excluding an amount of the sixth unit and an amount of the seventh unit (when necessary additionally excluding an amount of an eighth unit described below) from the total weight of the second polymer. For example, the fifth unit derived from the acrylic acid-based monomer may be present in an amount in a range of about 30 wt% to about 70 wt%, or an amount of about 50 wt% relative to the total weight of the second polymer. When an amount of the fifth unit derived from the acrylic acid-based monomer falls within the range above, it may be possible to reinforce physical properties of the binder BND and to improve dispersibility and storage stability of negative electrode slurry.

The acrylonitrile-based monomer may include, for example, (meth)acrylonitrile.

The sixth unit derived from the acrylonitrile-based monomer may be present in an amount in a range of about 20 wt% to about 60 wt% relative to the total weight of the second polymer. For example, the sixth unit derived from the acrylonitrile-based monomer may be present in an amount of about 30 wt% to about 50 wt% or an amount of about 40 wt% relative to the total weight of the second polymer. When an amount of the sixth unit derived from the acrylonitrile-based monomer falls within any of the ranges above, it may be possible to increase an adhesive force of the negative electrode active material layer to the negative electrode current collector, and to improve dispersibility and storage stability of negative electrode slurry.

The sulfonic acid-based monomer may include, for example, at least one of 2-acrylamido-2-methylpropane sulfonic acid, sodium styrene sulfonate, and sodium sulfopropyl (meth)acrylate.

The seventh unit derived from the sulfonic acid-based monomer may be present in an amount in a range of about 1 wt% to about 40 wt% relative to the total weight of the second polymer. For example, the seventh unit derived from the sulfonic acid-based monomer may be present in an amount of about 1 wt% to about 30 wt%, an amount of about 1 wt% to about 20 wt%, an amount of about 1 wt% to about 10 wt%, an amount of about 3 wt% to about 10 wt%, an amount of about 3 wt% to about 7 wt%, or an amount of about 5 wt% relative to the total weight of the second polymer. When an amount of the seventh unit derived from the sulfonic acid-based monomer falls within any of the ranges above, it may be possible to reduce or suppress swelling of the binder BND with respect to an electrolyte, to improve high-temperature cycle performance, and to reduce or prevent cracks in coating and dry processes of negative electrode slurry.

The second polymer may further include a unit derived from another monomer (referred to as hereinafter an eighth unit) that can copolymerize with the fifth to seventh units besides the fifth to seventh units. For example, the other monomer may include a water-soluble monomer. The water-soluble monomer may include, for example, at least one of (meth)acrylamide, N-isopropylacrylamide, N-(2-hydroxyethyl)acrylamide, N-(2-hydroxyethyl)methacrylamide, 2-hydroxyethyl (meth)acrylate, vinylpyrrolidone, vinylacetamide, vinylformamide, and vinyl alcohol.

When the second polymer further includes the eighth unit, the eighth unit may be present in an amount in a range of greater than about 0 wt% and equal to or less than about 20 wt% relative to the total weight of the second polymer. When an amount of the eighth unit falls within the range above, it may be possible to reduce or prevent cracks in coating and dry processes of negative electrode slurry, and to reduce or prevent delamination of the negative electrode plate even at a full charge of the rechargeable lithium battery.

The second polymer may have a weight average molecular weight in a range of about 300,000 to about 2,000,000. For example, the second polymer may have a weight average molecular weight of about 500,000 to about 1,800,000 or about 700,000 to about 1,600,000. The weight average molecular weight may be measured by gel permeation chromatography (GPC). For example, the weight average molecular weight may be measured using Gel Permeation Chromatography (GPC) with the 1200 series system from Agilent Technologies. The measurement may be conducted using a Shodex LF-804 column and polystyrene standards from Shodex.

A viscosity at 25°C of an aqueous solution including about 5 wt% of the second polymer may range from about 500 mPa·s to about 20,000 mPa·s. For example, the aqueous solution may have a viscosity of about 1,000 mPa·s to about 10,000 mPa·s or about 2,000 mPa·s to about 5,000 mPa·s. The aqueous solution may include the aqueous solvent discussed above. For example, the aqueous solvent may include water, an organic solvent, or a combination thereof. For example, the viscosity may be measured by a B-type viscometer. When a viscosity of the aqueous solution falls within any of the ranges above, it may be possible to increase an adhesive force between the negative electrode active material layer AML2 and the current collector COL2, and to provide the rechargeable lithium battery with desired or improved cycle-life characteristics. In addition, when a viscosity of the aqueous solution falls within any of the ranges above, a negative electrode slurry may have an appropriate viscosity to effectively manufacture a negative electrode. A solid content in the negative electrode slurry may be equal to the mass of the negative electrode active material layer in a dry state. The solid content may refer to a residue obtained by removing a solvent from a slurry, an aqueous solution, and the like.

As the binder according to some example embodiments of the present disclosure has a configuration as discussed above, it may be possible to increase an adhesive force between the negative electrode active material layer AML2 and the current collector COL2, to decrease a resistance of the rechargeable lithium battery, to maintain physical properties of the binder BND in an electrolyte, and to reduce or prevent delamination of the negative electrode plate even at a full charge of the rechargeable lithium battery.

The negative electrode plate and the rechargeable lithium battery each including the binder BND according to some example embodiments of the present disclosure may have the following features.

In a negative electrode plate according to some example embodiments of the present disclosure, an adhesive force between a negative electrode current collector and a negative electrode active material layer may range from about 1.2 gf/mm to about 1.8 gf/mm. In a rechargeable lithium battery according to some example embodiments of the present disclosure, a delamination rate of an electrode plate at a full charge may be equal to or less than about 10%. A rechargeable lithium battery according to some example embodiments of the present disclosure may have a resistance of less than about 92.0 mΩ. A rechargeable lithium battery according to some example embodiments of the present disclosure may have a cycle-life retention rate that is equal to or greater than about 85%.

### Fabrication of Binder BND

A method of fabricating the binder BND according to some example embodiments of the present disclosure may include synthesizing a second polymer, and mixing and polymerizing the second polymer and monomers included as raw materials for a first polymer to prepare a binder composition.

The synthesis of the second polymer may be carried out through the following process or sequence of steps. An acrylic acid-based monomer, an acrylonitrile-based monomer, a sulfonic acid-based monomer, and when necessary, another monomer (water-soluble monomer) may be mixed with the above elements in a flask, and may be stirred when necessary in an aqueous solution including sodium hydroxide and/or ammonia. An atmosphere in the flask may be replaced with nitrogen, and the mixed solution may be heated to a temperature of about 60°C. When the mixed solution reaches a temperature of about 60°C, a reaction initiator may be added to initiate polymerization. The mixed solution may be allowed to undergo a stirring and a polymerization reaction, thereby synthesizing the second polymer. For example, the second polymer may be included in an aqueous state in a subsequent step.

The fabrication of the binder composition may be carried out through the following process or sequence of steps. In a flask, an aqueous solution of the second polymer may be mixed with monomers used as raw materials for a first polymer. An atmosphere in the flask may be replaced with nitrogen, and the mixed solution may be heated to a temperature of about 60°C. When the mixed solution reaches a temperature of about 60°C, a reaction initiator may be added to initiate polymerization. The monomers used as raw materials for the first polymer may be allowed to undergo a stirring and a polymerization reaction under the presence of the second polymer, thereby stably synthesizing the first polymer in a state of dispersion in water and obtaining an aqueous dispersion of the binder BND (or binder composition). During the polymerization reaction to synthesize the first polymer, a portion of the second polymer and the first polymer may form chemical bonds, such as ionic bonds, hydrogen bonds, or covalent bonds, or the first polymer and the second polymer may be fixed to each other through an anchoring effect which occurs when the first polymer and the second polymer are entangled.

The reaction initiator may include an azo compound such as 2,2'-azobis(2-methyl-N-2-hydroxyethylpropionamide) or 2,2'-azobis[N-(2-carboxyethyl)-2-methylpropionamidine]tetrahydrate, and/or persulfate such as ammonium persulfate or potassium persulfate.

A solvent such as water may be removed to obtain the synthesized binder BND, or the aqueous dispersion of the binder BND (or binder composition) may be included as is. The solvent may be the same as the solvent included in the negative electrode slurry.

Herein, the present disclosure is described in detail with reference to some example embodiments. The following example embodiments are provided for illustrative purpose only and are not to be construed to limit the scope of the present disclosure.

### Example Embodiment 1

A binder was prepared to include a core and a shell for a rechargeable lithium battery. The core included a first polymer having a glass transition temperature of about 10°C. The shell included a second polymer having a glass transition temperature of about 190°C. An amount of the shell was about 5 wt% relative to the total weight of the binder. The binder was prepared by the following method.

### Preparation 1: Synthesis of Second Polymer

Acrylic acid, 2-acrylamido-2-methylpropane sulfonic acid (AMPS), acrylonitrile, ion-exchange water, and 2,2'-azobis(2-methyl-N-2-hydroxyethylpropionamide) were added to a flask, and then polymerized at about 85°C for about 4 hours or more. An amount of the acrylonitrile was about 40 wt% relative to the total weight of the monomers, and an amount of the 2-acrylamido-2-methylpropane sulfonic acid (AMPS) was about 5 wt% relative to the total weight of the monomers. Afterwards, a heat distillation under reduced pressure was employed to concentrate the reaction solution to eliminate a non-reacted monomer, and ammonium hydroxide (or ammonia water) and ion-exchange water were added to adjust a solid content in an aqueous solution of the second polymer to an amount of about 5 wt% and a pH of about 7.5. An obtained second polymer had a weight average molecular weight of about 900,000 and a molecular weight distribution of about 3.1. In addition, the obtained 5 wt% of the aqueous solution of the second polymer had a viscosity of about 4,200 mPa·s measured by a B-type viscometer (25°C, 30 rpm). Because there were few non-reacted monomer to be removed, an amount of used raw material was utilized as an amount of each monomer-derived unit of the second polymer.

### Preparation 2: Synthesis of Binder Composition

The aqueous solution of the second polymer obtained in Preparation 1, raw materials (2-ethylhexyl acrylate, styrene, and 1,4-butanediol dimethacrylate) of a first polymer, and ion-exchange water were added to a flask, heated to a temperature of about 65°C, and then an initiator solution was added in which 2,2'-azobis[N-(2-carboxyethyl)-2-methylpropionamidine]tetrahydrate was dissolved in ion-exchange water. The mixture was polymerized at a temperature of about 65°C for 12 hours or more to obtain a milk-white colored binder dispersion. The milk-white binder dispersion includes a binder stably dispersed in ion-exchange water, which binder includes a core including the first polymer generated by copolymerization of the raw materials is covered with a shell including the second polymer. A nonvolatile content in the dispersion after the reaction was about 35.5 mass%. Subsequently, a heat distillation under reduced pressure was employed to concentrate the reaction solution to eliminate a non-reacted monomer, and ammonium hydroxide (or ammonia water) and ion-exchange water were added to adjust a solid content in an aqueous solution of the binder (or binder composition) to an amount of about 30.3 wt% and a pH of about 7.5. The obtained binder composition had a viscosity at 25°C of about 300 mPa·s measured by a B-type viscometer (25°C, 30 rpm). Since there were few non-reacted monomer to be removed, an amount of used raw material was utilized as an amount of each monomer-derived unit of the first polymer or the binder.

### Example Embodiment 2

A binder was prepared in the same method as the method in Example Embodiment 1, with a difference that the first polymer of the core had a glass transition temperature of about 15°C.

### Example Embodiment 3

A binder was prepared in the same method as the method in Example Embodiment 1, with a difference that the second polymer of the shell had a glass transition temperature of about 180°C.

### Example Embodiment 4

A binder was prepared in the same method as the method in Example Embodiment 1, with a difference that an amount of the shell was about 3 wt% relative to the total weight of the binder.

### Example Embodiment 5

A binder was prepared in the same method as the method in Example Embodiment 1, with a difference that an amount of the shell was about 15 wt% relative to the total weight of the binder.

### Comparative Example 1

A binder was prepared in the same method as the method in Example Embodiment 1, with a difference that an amount of the shell was about 2 wt% relative to the total weight of the binder.

### Comparative Example 2

A binder was prepared in the same method as the method in Example Embodiment 1, with a difference that the first polymer of the core had a glass transition temperature of about 20°C.

### Comparative Example 3

A binder was prepared in the same method as the method in Example Embodiment 1, with a difference that the second polymer of the shell had a glass transition temperature of about 170°C.

### Comparative Example 4

A binder was prepared in the same method as the method in Example Embodiment 1, with a difference that an amount of the shell was about 20 wt% relative to the total weight of the binder.

### Comparative Example 5

A binder was prepared in the same method as the method in Example Embodiment 1, with a difference that the first polymer of the core had a glass transition temperature of about 5°C, and that an amount of the shell was about 20 wt% relative to the total weight of the binder.

### Comparative Example 6

A binder was prepared in the same method as the method in Example Embodiment 1, with a difference that neither the second polymer nor the shell was included.

### Comparative Example 7

A binder was prepared in the same method as the method in Example Embodiment 1, with a difference that neither the first polymer nor the core was included.

### Comparative Example 8

The methods discussed above could not prepare a binder that includes a core including the second polymer, and a shell including the first polymer.

### Manufacture of Negative Electrode Layer

Graphite, an aqueous solution of the binder, and sodium salt of carboxymethylcellulose were mixed in a weight ratio of about 97.2 : 2 : 1 in a water solvent to prepare a slurry.

A roll coater was used such that a 10 µm thick copper foil was coated on opposite sides thereof with the prepared slurry to have a loading amount of about 12 mg/cm², and then the copper foil coated with the slurry was dried at about 120°C. A roll press machine was used to press a negative electrode active material layer to have a density of about 1.60 g/cc to manufacture a negative electrode layer (or a negative electrode plate).

### Manufacture of Positive Electrode Layer

Li_{1.0}Ni_{0.88}Co_{0.1}Al_{0.01}Mg_{0.01}O₂, acetylene black, and polyvinylidene fluoride were dispersed and mixed in a weight ratio of 97.1 : 1 : 1.3 in an N-methyl-2-pyrrolidone solvent to prepare a positive electrode slurry.

A reverse roll coater was used such that a 10 µm thick aluminum current collector was coated on one side thereof with the prepared slurry to have a loading amount of about 19.8 mg/cm², and then the aluminum current collector coated with the slurry was dried. A roll press machine was used to press a positive electrode active material layer to have a density of about 3.70 g/cc to manufacture a positive electrode layer.

### Fabrication of Rechargeable Lithium Battery

The positive electrode layer and the negative electrode layer were cut into squares of 29 mm × 29 mm and 27 mm × 27 mm, respectively, nickel and aluminum lead wires were welded, and then a polyethylene porous separator was interposed between the positive electrode layer and the negative electrode layer. Nine sheets of positive electrode layer were sandwiched with ten sheets of negative electrode layer to prepare an electrode stack. Thereafter, the electrode stack was placed in an aluminum laminate film with the lead wires drawn out, and an electrolyte was injected and sealed under a reduced pressure to fabricate a rechargeable lithium battery. The electrolyte was obtained by dissolving about 1 M LiPF₆ and about 1 wt% of vinylene carbonate in a solvent including ethylene carbonate, ethyl methyl carbonate, and dimethyl carbonate mixed in a volume ratio of about 20 : 40 : 40. An injection amount of the electrolyte was about 1.25 g. A design capacity of the fabricated battery was about 500 mAh. The properties of the Examples and Comparative Examples are shown in Tables 1. The properties of the Examples and Comparative Examples are shown in Tables 1.

**Table 1:**

| Category | Glass transition temperature (°C) | | Amount of shell (wt%) |
|---|---|---|---|
| | Core | Shell | |
| Example Embodiment 1 | 10 | 190 | 5 |
| Example Embodiment 2 | 15 | 190 | 5 |
| Example Embodiment 3 | 10 | 180 | 5 |
| Example Embodiment 4 | 10 | 190 | 3 |
| Example Embodiment 5 | 10 | 190 | 15 |
| Comparative Example 1 | 10 | 190 | 2 |
| Comparative Example 2 | 20 | 190 | 5 |
| Comparative Example 3 | 10 | 170 | 5 |
| Comparative Example 4 | 10 | 190 | 20 |
| Comparative Example 5 | 5 | 190 | 20 |
| Comparative Example 6 | 10 | - | 0 |
| Comparative Example 7 | - | 190 | 100 |

### Experiment 1: Analysis on performance of negative electrode plate and rechargeable lithium battery

For negative electrodes and rechargeable lithium batteries including the binders according to Example Embodiments and Comparative Examples, an adhesive force of the negative electrode, a delamination rate of the electrode plate at a full charge, a direct-current internal resistance (DCIR), and a cycle-life retention rate were evaluated.

The adhesive force of the negative electrode was measured through the following method. Each of the negative electrode plates including the binders according to some example embodiments and comparative examples was cut into a piece of 25 mm wide and 100 mm long. A sample for evaluating an adhesive force of the negative electrode was prepared by attaching a negative electrode active material layer side, constituting an adhesion surface, through a double-sided tape to a glass substrate. A peeling tester (from Shimadzu Corporation) was equipped with the sample, and 180° peeling strength was measured.

The delamination rate of the electrode plate at a full charge was measured through the following method. Each of the rechargeable lithium batteries, including the binders according to Example Embodiments and Comparative Examples, was (fully) charged at 0.2 C to 4.25 V under the condition of constant current and constant voltage (CC/CV) (0.02 C cut-off) in a thermostatic bath at 25°C, and was then disassembled. The disassembled negative electrode plate was analyzed, and the following calculation was performed: one sheet was assigned when delamination occurred over more than half of an area, 0.5 sheets was assigned when delamination occurred over less than half of an area, and 0 sheets was assigned when no delamination occurred. The number of delaminated negative electrode plates was totaled, and this was converted into a percentage (%) of the total number of dissembled negative electrode plates.

The direct-current internal resistance (DCIR) was measured through the following method. Each of the rechargeable lithium batteries, including the binders according to Example Embodiments and Comparative Examples, was charged at 0.1 C to 4.25 V under the condition of constant current and constant voltage (CC/CV) (0.02 C cut-off) in a thermostatic bath at 25°C, and discharged at 0.1 C to 2.8 V. Afterwards, each of the rechargeable lithium batteries was charged at 0.2 C under the condition of constant current and constant voltage (CC/CV) (0.02 C cut-off) with a charge cutoff voltage of 4.25 V, and discharged at 0.2 C with a discharge cutoff voltage of 2.8 V. Then, at a temperature of 25°C, each of the rechargeable lithium batteries was charged at 0.2 C to a charge amount of 50%, and then was discharged at 1 C for 10 seconds. The value of direct-current internal resistance was obtained by dividing a voltage difference (amount of voltage drop for 10 seconds, V) between immediately before and after discharge by an applied current value of 1 C.

The cycle-life retention rate was measured through the following method. Each of the rechargeable lithium batteries was charged at 0.5 C to 4.25 V under the condition of constant current and constant voltage (CC/CV) (0.02 C cut-off) and discharged at 0.5 C to 2.8 V, which charge/discharge cycle was performed 300 times. A ratio of the discharge capacity at a 300^{th} cycle to the discharge capacity at a 1^{st} cycle was calculated and expressed as a cycle-life retention rate.

Table 2 shows the result.

**Table 2:**

| Category | Adhesive force of negative electrode (gf/mm) | Delamination rate of electrode plate at full charge (%) | DCIR (mΩ) | Cycle-life retention rate at 300^{th} cycle (%) |
|---|---|---|---|---|
| Example Embodiment 1 | 1.6 | 0 | 90.1 | 92 |
| Example Embodiment 2 | 1.4 | 0 | 90.6 | 91 |
| Example Embodiment 3 | 1.7 | 5 | 89.7 | 89 |
| Example Embodiment 4 | 1.8 | 10 | 89.0 | 88 |
| Example Embodiment 5 | 1.2 | 0 | 91.5 | 86 |
| Comparative Example 1 | 1.8 | >50 | Unable to manufacture cell | - |
| Comparative Example 2 | 1.1 | 0 | 92.0 | 83 |
| Comparative Example 3 | 1.8 | >50 | Unable to manufacture cell | - |
| Comparative Example 4 | 1.0 | 0 | 94.3 | 78 |
| Comparative Example 5 | 1.1 | 0 | 93.8 | 81 |
| Comparative Example 6 | 1.7 | 100 | Unable to manufacture cell | - |
| Comparative Example 7 | Unable to prepare electrode plate | - | Unable to manufacture cell | - |

Referring to Table 2, each of the negative electrode plate including the binders according to Example Embodiments 1 to 5 has a desired or improved adhesive force between the negative electrode current collector and the negative electrode active material layer. In addition, each of the rechargeable lithium batteries including the binders according to Example Embodiments 1 to 5 have a low delamination rate of the electrode plate at a full charge, a reduced resistance, and a desired or improved cycle-life retention rate.

A binder according to an example embodiment of the present disclosure may improve an adhesive force between a negative electrode active material layer and a current collector and maintain physical properties in an electrolyte.

A negative electrode plate and a rechargeable lithium battery according to an example embodiment of the present disclosure may have a desired or improved adhesive force, a low resistance, a long cycle-life, and may reduce or prevent delamination of an electrode plate even at a full charge.

Although some example embodiments of the present disclosure have been discussed with reference to accompanying figures, it is understood that various changes in form and details may be made therein without departing from the spirit and scope of the present disclosure. It therefore is understood that the example embodiments described above are just illustrative but not limitative in all aspects.

## Claims

1. A binder for a rechargeable lithium battery (100), the binder comprising:
a core including a first polymer having a glass transition temperature that is equal to or less than about 15°C; and
a shell on the core and including a second polymer having a glass transition temperature that is equal to or greater than about 180°C,
wherein an amount of the shell is less than an amount of the core.

2. The binder of claim 1, wherein the amount of the shell is ≥ 3 wt% to ≤ 15 wt% relative to a total weight of the binder.

3. The binder of claim 1 or 2, wherein the first polymer includes at least one of:
a first unit derived from an aromatic vinyl-based monomer;
a second unit derived from a (meth)acrylate-based monomer;
a third unit derived from a (meth)acrylic acid-based monomer; and
a fourth unit derived from a (meth)acrylamide-based monomer.

4. The binder of any of the claims 1 to 3, wherein the glass transition temperature of the first polymer is in a range of ≥ -20°C to ≤ 15°C.

5. The binder of any of the claims 1 to 4, wherein a ductility of the first polymer is greater than a ductility of the second polymer.

6. The binder of any of the claims 1 to 5, wherein the second polymer includes:
a fifth unit derived from an acrylic acid-based monomer;
a sixth unit derived from an acrylonitrile-based monomer; and
a seventh unit derived from a sulfonic acid-based monomer.

7. The binder of any of the claims 1 to 6, wherein the sulfonic acid-based monomer includes at least one of 2-acrylamido-2-methylpropane sulfonic acid, sodium styrene sulfonate, and sodium sulfopropyl (meth)acrylate.

8. The binder of any of the claims 1 to 7, wherein an amount of the seventh unit derived from the sulfonic acid-based monomer in the second polymer is in a range of ≥ 1 wt% to ≤ 40 wt% relative to a total weight of the second polymer.

9. The binder of any of the claims 1 to 8, further comprising an eighth unit derived from a water-soluble monomer,
wherein the water-soluble monomer includes at least one of (meth)acrylamide, N-isopropylacrylamide, N-(2-hydroxyethyl)acrylamide, N-(2-hydroxyethyl)methacrylamide, 2-hydroxyethyl (meth)acrylate, vinylpyrrolidone, vinylacetamide, vinylformamide, and vinyl alcohol.

10. The binder of any of the claims 1 to 9, wherein an average molecular weight of the second polymer is in a range of ≥ 300,000 to ≤ 2,000,000.

11. The binder of any of the claims 1 to 10, wherein the glass transition temperature of the second polymer is in a range of ≥ 180°C to ≤ 240°C.

12. The binder of any of the claims 1 to 11, wherein a rigidity of the second polymer is greater than a rigidity of the first polymer.

13. The binder of any of the claims 1 to 12, wherein the shell is more hydrophilic than the core.

14. A negative electrode plate, comprising:
a negative electrode current collector; and
a negative electrode active material layer,
wherein the negative electrode active material layer includes:
a negative electrode active material; and
the binder for the rechargeable lithium battery (100) as set forth in any of the claims 1 to 13.

15. A rechargeable lithium battery (100) including the binder for the rechargeable lithium battery (100) as set forth in any of the claims 1 to 13.
